# EUROPEAN PATENT SPECIFICATION

(11) **EP 1 672 228 B1**
(45) Date of publication and mention of the grant of the patent: **14.11.2007**
(21) Application number: 05111755.4
(22) Date of filing: 06.12.2005
(51) Int. Cl.: F16B 7/18, B62B 3/00, A47B 47/00

(54) **Device for connecting frame members**
Vorrichtung zum Verbinden von Rahmenteilen
Dispositif d'attache d'éléments de cadre

(30) Priority: 17.12.2004 IT PD20040315
(43) Date of publication of application: 21.06.2006
(73) Proprietor: Unox S.p.A., 35010 Vigodarzere (Padova) (IT)
(72) Inventor: Franzolin, Enrico, 35010, Vigodarzere PD (IT)
(74) Representative: Modiano, Micaela Nadia

(56) References cited:
- WO-A-20/04070278
- US-A- 5 961 243
- US-A1- 2003 030 239

## Description

The present invention relates to a device for connecting an upright and at least two cross-members that converge thereat, particularly for supporting frames. Such a device is known from document US-A-5,961,243.

The present invention also relates to a supporting frame that is assembled with a series of such connection devices.

Large ovens for cooking food, such as for example ovens for bakeries, confectioner's shops, delicatessens or diners and the like, in order to be better accessible by a user, are supported by supporting frames, which are suitable to raise them to such a height as to spare the user from having to bend down repeatedly to remove the plurality of baking pans contained in the oven.

Moreover, such supporting frames, if provided with wheels, allow to move easily the one or more ovens that they support.

An oven supported by a frame is also better ventilated, with a consequent reduced accumulation of heat in the room where the oven is installed.

Currently known supporting frames are generally constituted by four tubular uprights that rest on the ground.

These uprights are mutually connected by a first series of upper cross-members and by at least one second series of lower cross-members.

In a first type of frame, the ends of each cross-member are fixed to the uprights by way of welding operations, which in addition to being expensive and requiring a certain time to provide, as well as specialized labor, deform the uprights and the cross-members, to the detriment of the stability and durability of the frame.

In a second type of frame, each end of the cross-members is rigidly coupled to the upright by means of a screw, which passes through the upright and is screwed into a complementarily threaded female thread that is rigidly coupled to the end.

In this manner, coupling eight cross-members to four uprights requires sixteen screws and the same number of screwing operations, i.e., a large number of components and a proportionally long time for the assembly of such a frame.

A third type of frame has, at the ends of the uprights, an element made of plastics that is contoured so as to form insertion seats for the ends of the cross-members.

These elements made of plastics, in addition to being an additional cost during production, are in any case insufficient to ensure the solidity of the frame, which must be improved by using auxiliary diagonal reinforcement braces between one upright and the next.

The aim of the present invention is to provide a device for connecting an upright and at least two cross-members that converge thereat, particularly for supporting frames, that solves the problems and drawbacks of connection devices and methods used in frames of a known type.

Within this aim, an object of the present invention is to provide a supporting frame that is assembled by way of connection devices.

Another object of the present invention is to provide a frame that can be composed easily with a smaller number of components than known types of frame.

Another object of the present invention is to provide a frame whose solidity and load-bearing capacity are not lower than those of known types of frame despite the absence of auxiliary diagonal braces.

A further object of the present invention is to provide a connection device, and therefore a supporting frame, that can be assembled easily even by a user who has not received particular prior teaching.

A still further object of the present invention is to provide a connection device, and accordingly a supporting frame, that can be manufactured cheaply with known systems and technologies.

This aim and these and other objects that will become better apparent hereinafter are achieved by a device for connecting an upright and at least two cross-members that converge thereat, particularly for supporting frames, characterized in that the ends of said at least two cross-members are each inserted, through a corresponding complementarily shaped opening, in an upright, said ends being superimposed and crossed inside said upright, a first end of a first underlying cross-member being provided with a female thread element for fixing a threaded element, and a second end of the second overlying cross-member being provided with a through hole for the stem of said threaded element, said threaded element being suitable to lock said first end to said second end.

Further characteristics and advantages of the invention will become better apparent from the following detailed description of three preferred but not exclusive embodiments thereof, illustrated by way of non-limiting example in the accompanying drawings, wherein:

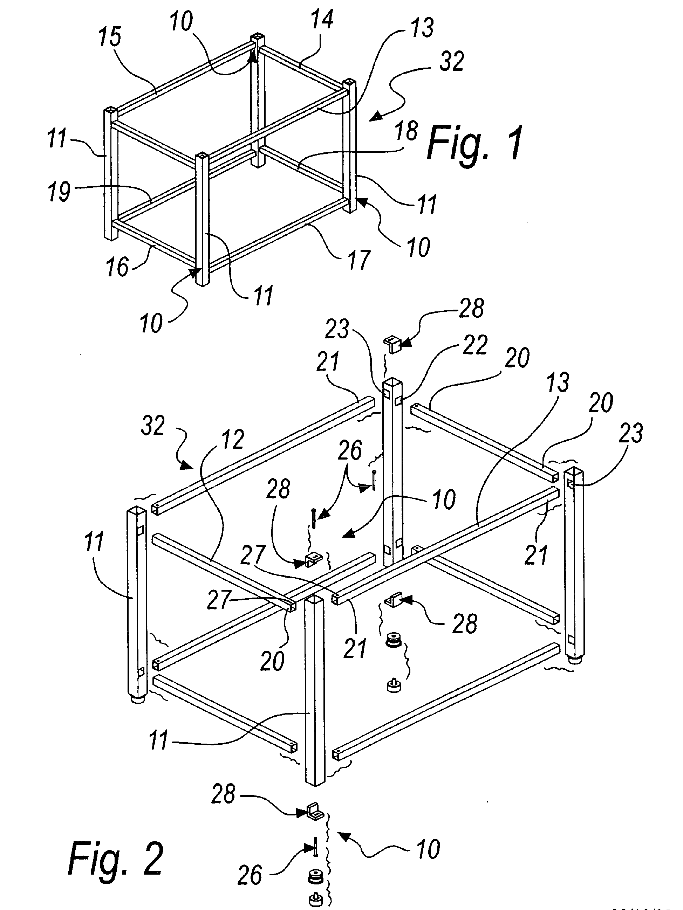

Figure 1 is a perspective view of a supporting frame according to the invention in the assembled condition;
Figure 2 is an exploded perspective view of a frame according to the invention;
Figure 3 is a partially sectional perspective view of a connection device according to the invention;
Figure 4 is an exploded version of the perspective view of Figure 3;

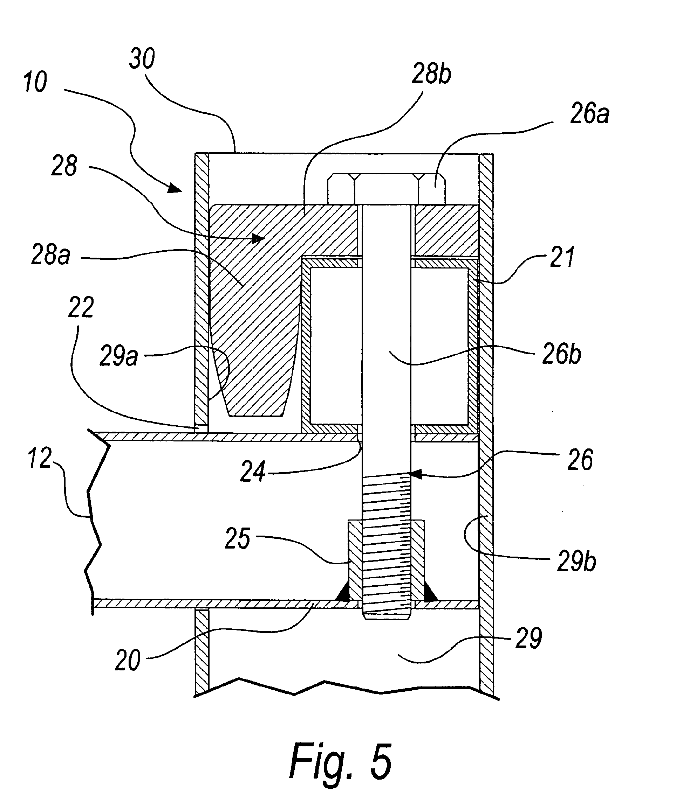

Figure 5 is a sectional side view of the connection device of Figure 3;

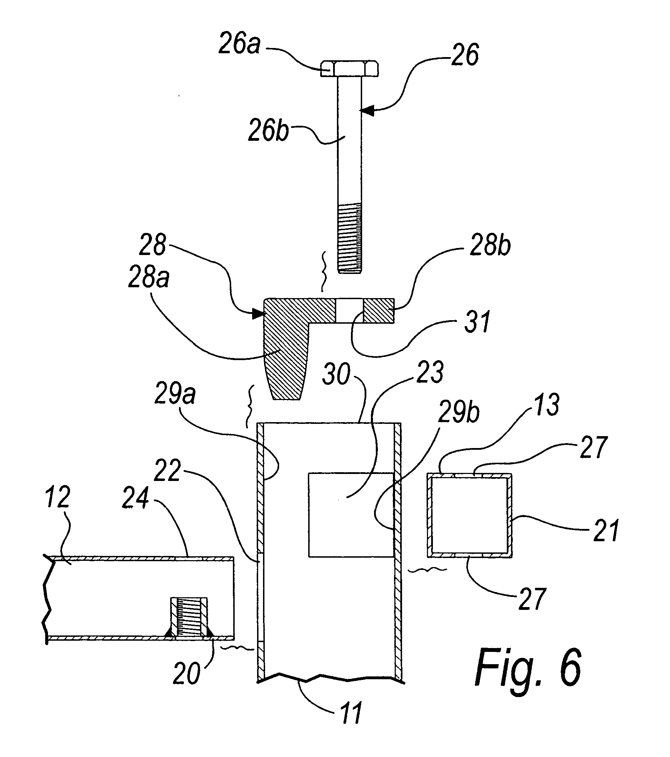

Figure 6 is an exploded version of the side view of Figure 5;
Figure 7 is a partially sectional exploded perspective view of a second embodiment of a connection device according to the invention;
Figure 8 is a view of the assembly of the components of the exploded view of Figure 7;
Figure 9 is a sectional side view of the connection device according to the invention in a third embodiment.

With reference to the figures, a device for connecting an upright and at least two cross-members that converge thereat, according to the invention, is generally designated by the reference numeral 10.

The device 10, in the embodiment described here, acts between an upright 11 and two cross-members that converge thereat, designated by the reference numerals 12 and 13 respectively.

The two cross-members 12 and 13 have ends, designated by the reference numerals 20 and 21 respectively, which are each inserted in the upright 11 through a corresponding complementarily shaped opening 22 and 23.

The ends 20 and 21 are superimposed and crossed inside the upright 11.

A first end 20 of a first underlying cross-member 12 is provided with a female thread element 25 for fixing a threaded element 26.

The second end 21 of the second overlying cross-member 13 is provided with a through hole 27 for the stem 28 of the threaded element 26.

The threaded element 26 is suitable to lock the first end 20 to the second end 21.

The first end 20 and the second end 21 are locked in a certain position, with respect to each other and with respect to the cavity of the upright 11 in which they are inserted, by means of a positioning insert 28.

The insert 28 is forced between the internal wall 29 of the upright 11 and the second end 21.

The insert 28 is suitable to arrange coaxially the female thread element 25 of the first end 20 and the through hole 27 of the second end 21.

It is this coaxial arrangement that in fact allows to assemble easily and quickly the two ends 20 and 21 by connecting them to the threaded element 26, which is constituted by a screw.

The insert 28 is arranged between a part 29a of the internal wall 29 of the upright 11 and the second end 21.

The insert 28 is suitable to push the second end 21 against the opposite part 29b of the internal wall of the upright 11.

The first end 20 and the second end 21 are inserted within the upright 11 until their end abuts against the internal wall 29 of said upright.

In the first embodiment of the device 10 according to the invention described so far, the insert 28 is substantially L-shaped.

A first lateral portion 28a is forced between the second end 21 and the internal wall of the upright 29, and a second portion 28b, which is substantially perpendicular to the first portion 28a and to the axis of the upright 11 in which the insert 28 is inserted, is suitable to affect the surface of the second end 21 that is directed toward the nearby mouth 30 of the upright 11.

A through hole 31 for said threaded element 26 is provided on the second portion 28b of the L-shaped insert 28 and the head 26a of the element also clamps the second portion 28b of the L-shaped insert 28.

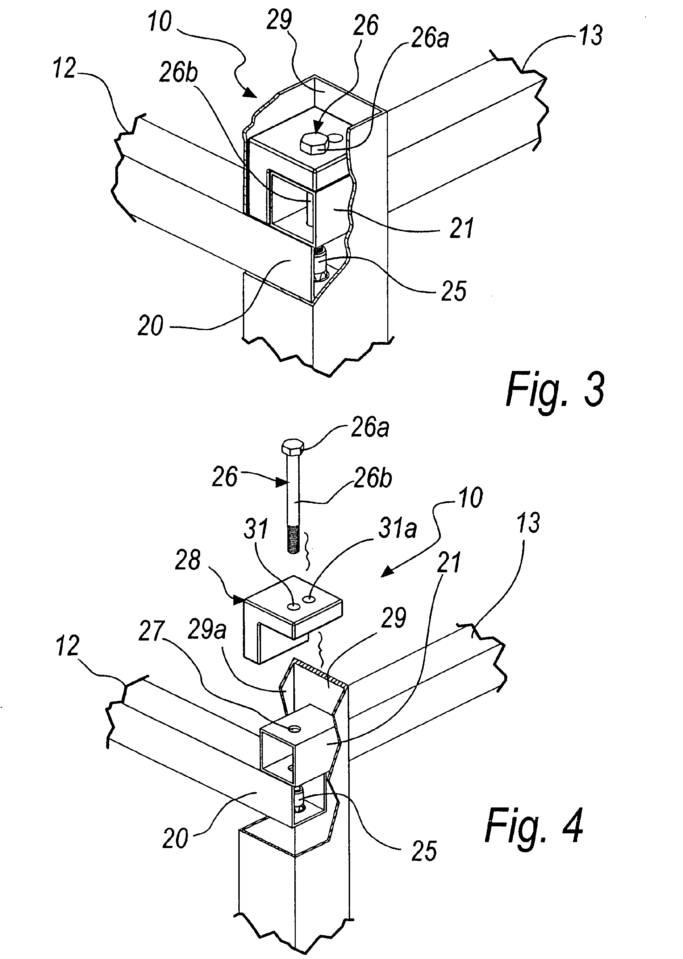

Figures 3 and 4 illustrate another hole 3 1 a, which is provided parallel to the hole 31 and proximate thereto.

The additional hole 31a allows to use an identical insert 28 in devices 10 having a mirror-symmetrical geometry.

The first portion 28a of the insert 28 is tapered, i.e., its cross-section decreases in the direction in which it is inserted between the second overlying end 21 and the internal wall 29a of the upright 11.

This geometry allows a wedge-like action of the first portion 28a, which in this manner can be inserted easily between the two parts and can be forced equally easily, locking the second end 21 in its position adjacent to the internal wall 29b.

In the present embodiment of the invention, the tubular upright 11 has a substantially square cross-section.

The cross-members 12 and 13 are also tubular, and they, too, have a square cross-section, with a side that is shorter than the side of the cross-section of the upright 11.

In the present embodiment, the female thread element 25 is constituted by a bush, which is threaded internally and is welded inside the first end 20.

As an alternative to the bush, the female thread element 25 can be constituted by an insert that is appropriately threaded complementarily with respect to the screw or by a nut that is fixed with a spot weld.

The first end 20 has a hole 24 for the threaded element 26, which faces the overlying second end 21.

The hole 24 allows the threaded element 26 to access the female thread element 25.

The insert 28 is made of metallic material.

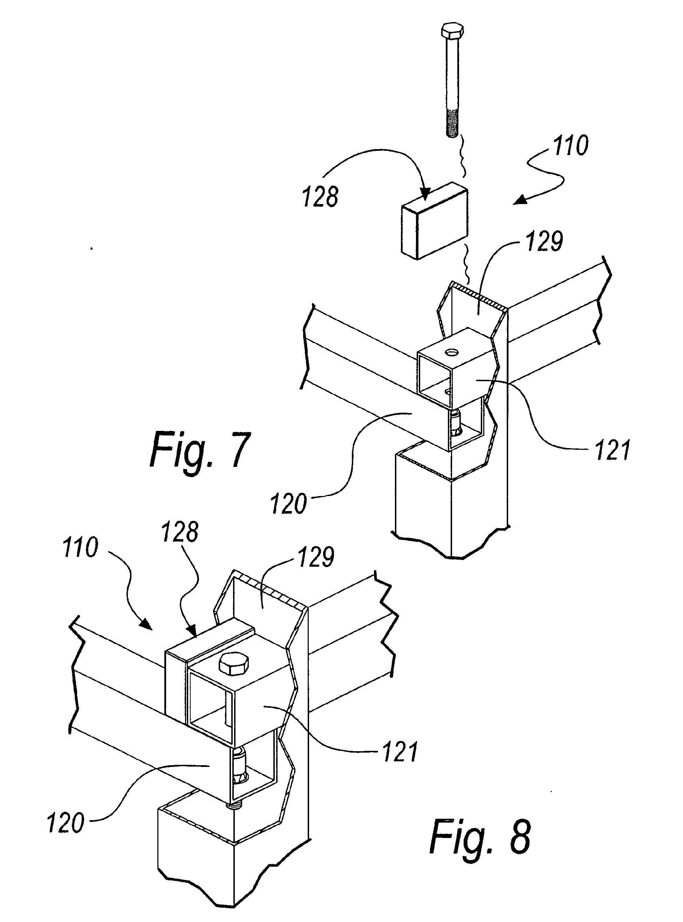

In a second embodiment, shown in Figures 7 and 8, the device, now designated by the reference numeral 110, is provided with an insert 128 constituted only by its first portion 28a, which is forced between the second end 121 and the internal wall of the upright 129.

This embodiment can be simpler and cheaper.

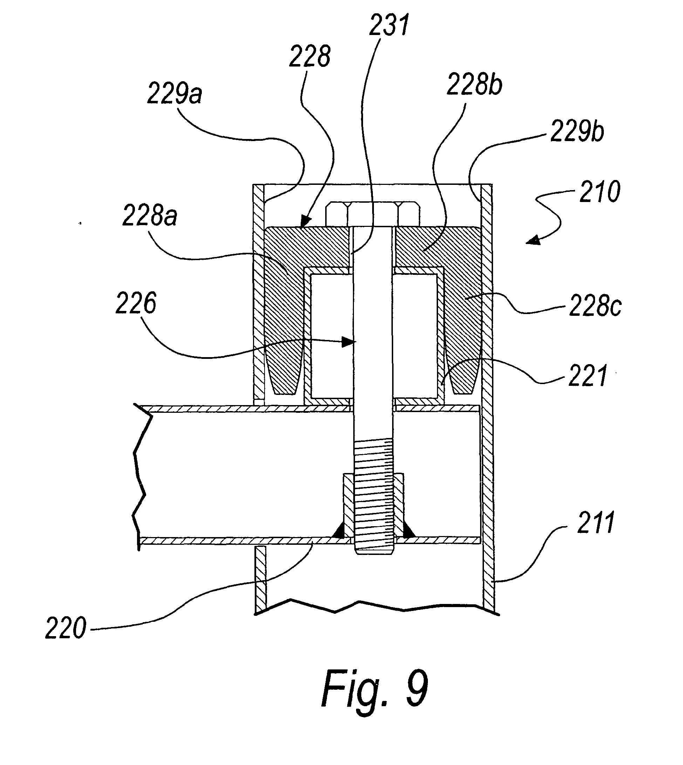

Figure 9 illustrates a third embodiment of the device according to the invention, designated by the reference numeral 210.

In this third embodiment, the device 210 is provided with a substantially U-shaped insert 228.

The insert 228 straddles the second end 221, with a first lateral portion 228a that is inserted between said end and a first part of the internal surface 229a of the upright 221, and with a second lateral portion 228c, which is symmetrical with respect to the first portion 228a, and is inserted likewise between the second end 221 and a second opposite part of the internal surface 229b.

The insert 228 allows to center the corresponding cross-member with respect to the end 221.

As in the first embodiment, the insert 228 has, on its portion 228b that is substantially perpendicular to the axis of the upright 211, a hole 231 for the passage of the threaded locking element 226.

In all of the embodiments described above, the insert 28, 128 and 228 is tapered so as to not abut against the underlying first end 20, 120 or 220 and at the most skim it.

The present invention also relates to a supporting frame 32 of the type constituted by four tubular uprights 11, which rest on the ground and are mutually connected by a first series of upper cross-members 12, 13, 14 and 15 and by a second series of lower cross-members 16, 17, 18 and 19.

A device for connecting an upright and at least two cross-members that converge thereat 10, 110 and 210 according to the invention allows to eliminate the welding operations, to halve the threaded elements to be used (one screw for the simultaneous locking of two ends instead of one screw for each end, as in the second type of frame described earlier), and to eliminate additional components made of plastic material, which are expensive and fragile.

The device 10, 110 and 210 according to the invention combines constructive simplicity with greater strength than known connection devices and methods.

The ends of the cross-members 12, 13, 14, 15, 16, 17, 18 and 19 are fixed in pairs to the respective uprights 11 by way of corresponding connection devices 10, 110 and 210 as described above.

The strength of the device 10, 110 and 210 is such that the frame 32 does not require auxiliary diagonal braces.

Moreover, the absence of welding beads makes the frame 32 aesthetically more pleasant than known types of supporting frame.

In practice it has been found that the invention thus described solves the problems noted in devices and methods for connecting an upright and at least two cross-members that converge thereat, particularly for supporting frames, of a known type; in particular, the present invention provides a supporting frame that is assembled by virtue of said connection devices according to the invention.

Moreover, the present invention provides a connection device and a frame that can be composed easily with a smaller number of components than known types of frame.

Further, the present invention provides a connection device, and therefore a frame, whose solidity and load-bearing capacity are not lower than those of known types of frame despite the absence of diagonal auxiliary braces.

Finally, the present invention provides a connection device, and therefore a supporting frame, that can be manufactured cheaply with known systems and technologies.

In practice, the materials employed, so long as they are compatible with the specific use, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for connecting an upright and at least two cross-members that converge thereat, particularly for supporting frames, **characterized in that** the ends (20, 120, 220, 21, 121, 221) of said at least two cross-members (12, 13) are each inserted, through a corresponding complementarily shaped opening (22, 23), in an upright (11, 211), said ends (20, 21, 120, 121, 220, 221) being superimposed and crossed inside said upright (11, 211), a first end (20, 120, 220) of a first underlying cross-member (12) being provided with a female thread element (25) for fixing a threaded element (26, 226), and a second end (21, 121, 221) of the second overlying cross-member (13) being provided with a through hole (27) for the stem (28) of said threaded element (26, 226), said threaded element (26, 226) being suitable to lock said first end (20, 120, 220) to said second end (21, 121, 221).

2. The connection device according to claim 1, **characterized in that** said first end (20, 120, 220) and said second end (21, 121, 221) are locked in a given position, with respect to each other and with respect to the cavity of the upright (11, 211) in which they are inserted, by virtue of a positioning insert (28, 128, 228), which is forced between the internal wall (29, 129, 229) of said upright (11, 211) and at least one of said first end (20, 120, 220) and said second end (21, 121, 221), said insert (28, 128, 228) being suitable to produce the coaxial arrangement of the female thread element (25) of said first end (20, 120, 220) and the through hole (27) of said second end (21, 121,221).

3. The connection device according to one or more of the preceding claims, **characterized in that** said insert (28, 128) is arranged between a part (29a) of the internal wall (29, 129) of said upright (11) and the second overlying end (21, 121), and is suitable to push said second end (21, 121) against the opposite part (29b) of the internal wall of said upright (11).

4. The connection device according to one or more of the preceding claims, **characterized in that** said first end (20, 120, 220) and said second end (21, 121, 221) are inserted within the upright (11, 211) until their head abuts against the internal wall (29, 129, 229) of said upright.

5. The connection device according to one or more of the preceding claims, **characterized in that** said insert (28) is substantially L-shaped, a first portion (28a) thereof being forced between said second end (21) and the internal wall of the upright (29), a second portion (28b), substantially perpendicular to the first portion (28a), being suitable to affect the surface of the second end (21) that is directed toward the nearby mouth (30) of the upright (11).

6. The connection device according to one or more of claims 1 to 4, **characterized in that** said insert (228) is substantially U-shaped and is suitable to straddle the second end (221), with a first lateral portion (228a) that is inserted between said second end (221) and a first part of the internal surface (229a) of the upright (211), and with a second lateral portion (228c), which is symmetrical to the first lateral portion (228a) and is likewise inserted between the second end (221) and a second opposite part of the internal surface (229b), said insert (228) being provided with a hole.

7. The connection device according to one or more of the preceding claims, **characterized in that** a through hole (31, 231) for said threaded locking element (26, 226) is provided in said second portion (28b, 228b) of the insert (28, 228).

8. The connection device according to one or more of the preceding claims, **characterized in that** said lateral portion (28a, 228a, 228c) of the insert (28, 128, 228) is tapered, its cross-section decreasing in the direction of its insertion between the overlying second end (21, 121, 221) and the internal wall (29, 129, 229a, 229b) of the upright (11, 211).

9. The connection device according to one or more of the preceding claims, **characterized in that** said threaded element (26, 226) is a screw, the head (26a) of which also clamps said portion (28b, 228b) of the insert (28, 228) that is substantially perpendicular to the axis of the upright (11, 211) in which the insert (28, 228) is inserted.

10. The connection device according to one or more of the preceding claims, **characterized in that** said tubular upright (11, 211) has a substantially square cross-section.

11. The connection device according to one or more of the preceding claims, **characterized in that** said cross-members (12, 13, 14, 15, 16, 17, 18, 19) are tubular.

12. The connection device according to claim 11, **characterized in that** said tubular cross-members (12, 13, 14, 15, 16, 17, 18, 19) have a square cross-section whose side is shorter than the side of the cross-section of the upright (11, 211).

13. The connection device according to one or more of the preceding claims, **characterized in that** said female thread element (25) is constituted by a bush, which is internally threaded and welded internally to said first end (20, 120, 220), said first end (20, 120, 220) being provided with a hole (24), which faces the overlying second end (21, 121, 221) and is provided for said threaded element (26, 226) for access to said female thread element (25).

14. The connection device according to one or more of the preceding claims, **characterized in that** said insert (28, 128, 228) is made of metallic material.

15. A supporting frame, of the type constituted by four tubular uprights (11) that rest on the ground and are mutually connected by a first series of upper cross-members (12, 13, 14, 15) and by at least one second series of lower cross-members (16, 17, 18, 19), **characterized in that** the ends of said cross-members (12, 13, 14, 15, 16, 17, 18, 19) are fixed in pairs to said uprights (11, 211) by way of corresponding connection devices (10, 110, 210) according to one or more of the preceding claims.

## Patentansprüche

1. Vorrichtung zum Verbinden eines vertikalen Elementes und wenigstens zweier quer verlaufender Elemente, die daselbst konvergieren, insbesondere für Stützrahmen,
**dadurch gekennzeichnet,**
**dass** die Enden (20,120,220,21,121,221) der wenigstens zwei quer verlaufenden Elemente (12,13) jeweils durch eine entsprechend komplementär geformte Öffnung (22,23) in ein vertikales Element (11,211) eingeführt sind, wobei die Enden (20,21,120,121,220,221) übereinander angeordnet und innerhalb des vertikalen Elementes (11,211) gekreuzt sind, wobei ein erstes Ende (20,120,220) eines ersten unten liegenden, quer verlaufenden Elementes (12) zur Befestigung eines mit einem Gewinde versehenen Elementes (26,226) mit einem weiblich geformten Gewindeelement (25) versehen ist, und wobei ein zweites Ende (21,121,221) des zweiten oben liegenden quer verlaufenden Elementes (13) mit einer Durchgangsbohrung (27) für den Schaft (28) des mit einem Gewinde versehenen Elementes (26,226) versehen ist, wobei das mit einem Gewinde versehene Element (26,226) geeignet ist, das erste Ende (20,120,220) am zweiten Ende (21,121,221) zu befestigen.

2. Verbindungsvorrichtung nach Anspruch 1,
**dadurch gekennzeichnet,**
**dass** das erste Ende (20,120,220) und das zweite Ende (21, 121,221) in einer vorgegebenen Position in Bezug zueinander und in Bezug auf den Hohlraum in dem vertikalen Element (11,211), in welches sie eingesetzt sind, mittels eines Positioniereinsatzes (28,128,228) befestigt sind, welcher zwischen die innere Wand (29,129,229) des vertikalen Elementes (11,211) und wenigstens eines des ersten Endes (20,120,220) und des zweiten Endes (21,121,221) gedrückt ist, wobei der Einsatz (28,128,228) geeignet ist, eine koaxiale Anordnung des weiblichen Gewindeelementes (25) des ersten Endes (20,120,220) und der Durchgangsbohrung (27) des zweiten Elementes (21,121,221) zu erzeugen.

3. Verbindungsvorrichtung nach einem oder mehreren der vorangehenden Ansprüche,
**dadurch gekennzeichnet,**
**dass** der Einsatz (28,128) zwischen einem Teil (29a) der inneren Wand (29,129) des vertikalen Elementes (11) und des zweiten oben liegenden Endes (21,121) angeordnet und geeignet ist, das zweite Ende (21,121) gegen den entgegengesetzten Teil (29b) der inneren Wand des vertikalen Elementes (11) zu drücken.

4. Verbindungsvorrichtung nach einem oder mehreren der vorangehenden Ansprüche,
**dadurch gekennzeichnet,**
**dass** das erste Ende (20,120,220) und das zweite Ende (21, 121,221) in das vertikale Element (11,211) eingeführt sind bis ihre Köpfe gegen die innere Wand (29,129,229) des vertikalen Elementes anstoßen.

5. Verbindungsvorrichtung nach einem oder mehreren der vorangehenden Ansprüche,
**dadurch gekennzeichnet,**
**dass** der Einsatz (28) im Wesentlichen L-förmig ist, wobei ein erster Bereich (28a) davon zwischen das zweite Ende (21) und die innere Wand des vertikalen Elementes (29) gedrückt ist, wobei ein zweiter Bereich (28b), der im Wesentlichen rechtwinklig zum ersten Bereich (28a) ist, geeignet ist, auf die Oberfläche des zweiten Endes (21) einzuwirken, das gegen den benachbarten Mund (30) des vertikalen Elementes (11) gerichtet ist.

6. Verbindungsvorrichtung nach einem oder mehreren der Ansprüche 1 bis 4,
**dadurch gekennzeichnet,**
**dass** der Einsatz (228) im Wesentlichen U-förmig ist und geeignet ist, dass zweite Ende (221) mit einem ersten seitlichen Bereich (228a), der zwischen das zweite Ende (221) und einen ersten Teil der internen Oberfläche (229a) des vertikalen Elementes (211) eingeführt wird, und mit einem zweiten seitlichen Bereich (228c) zu spreizen, welcher symmetrisch zum ersten seitlichen Bereich (228a) ist und ebenfalls zwischen das erste Ende (221) und einen ersten entgegengesetzten Teil der inneren Oberfläche (229b) eingeführt wird, wobei der Einsatz (228) mit einer Bohrung versehen ist.

7. Verbindungsvorrichtung nach einem oder mehreren der vorangehenden Ansprüche,
**dadurch gekennzeichnet,**
**dass** eine Durchgangsbohrung (31,231) für das mit einem Gewinde versehene Verriegelungselement (26,226) in dem zweiten Bereich (28b,228b) des Einsatzes (28,228) vorgesehen ist.

8. Verbindungsvorrichtung nach einem oder mehreren der vorangehenden Ansprüche;
**dadurch gekennzeichnet,**
**dass** der seitliche Bereich (28a, 228a, 228c) des Einsatzes (28,128,228) abgeflacht ist, wobei der Querschnitt in der Richtung seiner Einführung abnimmt, zwischen dem oben liegenden Ende (21,121,221) und der inneren Wand (29,129, 229a,229b) des vertikalen Elementes (11,211).

9. Verbindungsvorrichtung nach einem oder mehreren der vorangehenden Ansprüche,
**dadurch gekennzeichnet,**
**dass** das mit einem Gewinde versehene Element (26,226)_eine Schraube ist, deren Kopf (26a) auch den Bereich (28b,228b) des Einsatzes (28,228) klemmt, welcher im Wesentlichen rechtwinklig zur Achse des vertikalen Elementes (11,211) ist, in welches der Einsatz (28,228) eingeführt ist.

10. Verbindungsvorrichtung nach einem oder mehreren der vorangehenden Ansprüche,
**dadurch gekennzeichnet,**
**dass** das rohrförmige vertikale Element (11,211) einen im Wesentlichen quadratischen Querschnitt aufweist.

11. Verbindungsvorrichtung nach einem oder mehreren der vorangehenden Ansprüche,
**dadurch gekennzeichnet,**
**dass** die quer verlaufenden Elemente (12,13,14,15,16,17, 18,19) rohrförmig sind.

12. Verbindungsvorrichtung nach Anspruch 11,
**dadurch gekennzeichnet,**
**dass** die rohrförmigen quer verlaufenden Elemente (12,13, 14,15,16,17,18,19) einen quadratischen Querschnitt haben, dessen Kantenlänge kürzer als die Kantenlänge des Querschnittes des vertikalen Elementes (11,211) ist.

13. Verbindungsvorrichtung nach einem oder mehreren der vorangehenden Ansprüche,
**dadurch gekennzeichnet,**
**dass** das weibliche mit einem Gewinde versehene Element (25) von einer Hülse gebildet ist, die im Inneren mit einem Gewinde versehen ist und im Inneren an das erste Ende (20, 120,220) angeschweißt ist, wobei das erste Ende (20,120, 220) mit einer Bohrung (24) versehen ist, welche dem oben liegenden zweiten Ende (21,121,221) gegenüberliegt und für das mit einem Gewinde versehene Element (26,226) vorgesehen ist als Zugang zum weiblichen, mit einem Gewinde versehenen Element (25).

14. Verbindungsvorrichtung nach einem oder mehreren der vorangehenden Ansprüche,
**dadurch gekennzeichnet,**
**dass** der Einsatz (28,128,228) aus einem metallischen Material besteht.

15. Stützrahmen des Typs der aus vier rohrförmigen vertikalen Elementen (11) besteht, welche auf einer Grundfläche aufstehen und wechselseitig mit einer ersten Reihe von oberen quer verlaufenden Elementen (12,13,14,15) und mit wenigstens einer zweiten Reihe von unteren quer verlaufenden Elementen (16,17,18,19) verbunden sind,
**dadurch gekennzeichnet,**
**dass** die Enden der quer verlaufenden Elemente (12,13,14, 15,16,17,18,19) paarförmig an den vertikalen Elementen (11, 211) mittels entsprechender Verbindungsvorrichtungen (10, 110,210) gemäß einem oder mehreren der vorangehenden Ansprüche befestigt sind.

## Revendications

1. Dispositif pour raccorder un montant et au moins deux traverses qui y convergent, en particulier pour des cadres de support, **caractérisé en ce que** les extrémités (20, 120, 220, 21, 121, 221) desdites au moins deux traverses (12, 13) sont chacune insérées, à travers une ouverture (22, 23) correspondante formée de façon complémentaire, dans un montant (11, 211), lesdites extrémités (20, 21, 120, 121, 220, 221) étant superposées et croisées à l'intérieur dudit montant (11, 211), une première extrémité (20, 120, 220) d'une première traverse sous-jacente (12) étant munie d'un élément fileté femelle (25) pour fixer un élément fileté (26, 226), et une deuxième extrémité (21, 121, 221) de la deuxième traverse placée au-dessus (13) étant munie d'un trou traversant (27) pour la tige (28) dudit élément fileté (26, 226), ledit élément fileté (26, 226) étant approprié à verrouiller ladite première extrémité (20, 120, 200) à ladite deuxième extrémité (21, 121, 221).

2. Dispositif de raccord selon la revendication 1, **caractérisé en ce que** ladite première extrémité (20, 120, 220) et ladite deuxième extrémité (21, 121, 221) sont verrouillées dans une position donnée, l'une par rapport à l'autre et par rapport à la cavité du montant (11, 211) dans laquelle elles sont insérées, grâce à un insert de positionnement (28, 128, 228), qui est forcé entre la paroi interne (29, 129, 229) dudit montant (11, 211) et au moins une de ladite première (20, 120, 220) et de ladite deuxième extrémité (21, 121, 221), ledit insert (28, 128, 228) étant approprié à produire l'agencement coaxial dudit élément fileté femelle (25) de ladite première extrémité (20, 120, 220) et le trou traversant (27) de ladite deuxième extrémité (21, 121,221).

3. Dispositif de raccord selon une ou plusieurs des revendications précédentes, **caractérisé en ce que** ledit insert (28, 128) est agencé entre une partie (29a) de la paroi interne (29, 129) dudit montant (11) et la deuxième extrémité placée au-dessus (21, 121) et est approprié à pousser ladite deuxième extrémité (21, 121) contre la partie opposée (29b) de la paroi interne dudit montant (11).

4. Dispositif de raccord selon une ou plusieurs des revendications précédentes, **caractérisé en ce que** ladite première extrémité (20, 120, 220) et ladite deuxième extrémité (21, 121, 221) sont insérées dans ledit montant (11, 211) jusqu'à ce que leur tête bute contre la paroi interne (29, 129, 229) dudit montant.

5. Dispositif de raccord selon une ou plusieurs des revendications précédentes, **caractérisé en ce que** ledit insert (28) est sensiblement en forme de L, une première partie (28a) de celui-ci étant forcée entre ladite deuxième extrémité (21) et la paroi interne (29) du montant, une deuxième partie (28b), sensiblement perpendiculaire à la première partie (28a), étant approprié à affecter la surface de la deuxième extrémité (21) qui est dirigée vers l'entrée proche (30) du montant (11).

6. Dispositif de raccord selon une ou plusieurs des revendications 1 à 4, **caractérisé en ce que** ledit insert (228) est sensiblement en forme de U et est approprié à se placer à cheval sur la deuxième extrémité (221), avec une première partie latérale (228a) qui est insérée entre ladite deuxième extrémité (221) et une première partie de la surface interne (229a) du montant (211), et avec une deuxième partie latérale (228c), qui est symétrique à la première partie latérale (228a) et qui est insérée de la même façon entre la deuxième extrémité (221) et une deuxième partie opposée de la surface interne (229b), ledit insert (228) étant muni d'un trou.

7. Dispositif de raccord selon une ou plusieurs des revendications précédentes, **caractérisé en ce qu'**un trou traversant (31, 231) pour ledit élément de verrouillage fileté (26, 226) est prévu dans ladite deuxième partie (28b, 228b) de l'insert (28, 228).

8. Dispositif de raccord selon une ou plusieurs des revendications précédentes, **caractérisé en ce que** ladite partie latérale (28a, 228a, 228c) de l'insert (28, 128, 228) est conique, sa section transversale décroissant dans la direction de son insertion entre la deuxième extrémité placée au-dessus (21, 121, 221) et la paroi interne (29, 129, 229a, 229b) du montant (11, 211).

9. Dispositif de raccord selon une ou plusieurs des revendications précédentes, **caractérisé en ce que** ledit élément fileté (26, 226) est une vis, sa tête (26a) pinçant également ladite partie (28a, 228b) de l'insert (28, 228) qui est sensiblement perpendiculaire à l'axe du montant (11, 211) dans lequel l'insert (28, 228) est inséré.

10. Dispositif de raccord selon une ou plusieurs des revendications précédentes, **caractérisé en ce que** ledit montant tubulaire (11, 211) présente une section transversale sensiblement carrée.

11. Dispositif de raccord selon une ou plusieurs des revendications précédentes, **caractérisé en ce que** lesdites traverses (12, 13, 14, 15, 16, 17, 18, 19) sont tubulaires.

12. Dispositif de raccord selon la revendication 11, **caractérisé en ce que** lesdites traverses tubulaires (12, 13, 14, 15, 16, 17, 18, 19) présentent une section transversale carrée dont le côté est plus court que le côté de la section transversale du montant (11, 211).

13. Dispositif de raccord selon une ou plusieurs des revendications précédentes, **caractérisé en ce que** ledit élément fileté femelle (25) est constituée par une douille, qui est filetée intérieurement et soudée intérieurement à ladite première extrémité (20, 120, 220), ladite première extrémité (20, 120, 220) étant munie d'un trou (24), qui fait face à la deuxième extrémité placée au-dessus (21, 121, 221) et qui est prévue pour ledit élément fileté (26, 226) pour l'accès audit élément fileté femelle (25).

14. Dispositif de raccord selon une ou plusieurs des revendications précédentes, **caractérisé en ce que** ledit insert (28, 128, 228) est réalisé en un matériau métallique.

15. Cadre de support, du type constitué de quatre montants tubulaires (11) qui reposent sur le sol et qui sont mutuellement raccordés par une première série de traverses supérieures (12, 13, 14, 15) et par au moins une deuxième série de traverses inférieures (16, 17, 18, 19), **caractérisé en ce que** les extrémités desdites traverses (12, 13, 14, 15, 16, 17, 18, 19) sont fixées deux par deux auxdits montants (11, 211) au moyen de dispositifs de raccord correspondants (10, 110, 210) selon une ou plusieurs des revendications précédentes.
